# NEUE EUROPÄISCHE PATENTSCHRIFT

(11) **EP 3 536 404 B2**
(45) Veröffentlichungstag und Bekanntmachung des Hinweises auf die Entscheidung über den Einspruch: **14.08.2024**
(45) Hinweis auf die Patenterteilung: 05.08.2020
(21) Anmeldenummer: 18160708.6
(22) Anmeldetag: 08.03.2018
(51) Int. Cl.: B02C 4/42, F16H 57/021

(54) **STÜTZVORRICHTUNG FÜR GETRIEBEPAAR UND INDUSTRIEAPPLIKATION**
SUPPORT DEVICE FOR GEAR PAIR AND INDUSTRY APPLICATION
DISPOSITIF SUPPORT POUR UN COUPLE CINÉMATIQUE ET APPLICATION INDUSTRIELLE

(43) Veröffentlichungstag der Anmeldung: 11.09.2019
(73) Patentinhaber: Flender GmbH, 46395 Bocholt (DE)
(72) Erfinder: Becka, Simon, 45128 Essen (DE); Düvel, Volker, 46397 Bocholt (DE); Hoffmann, Marco, 45145 Essen (DE); Leuer, Philipp, 45130 Essen (DE)
(74) Vertreter: Michalski Hüttermann & Partner Patentanwälte mbB

(56) Entgegenhaltungen:
- EP-A1- 0 775 525
- DE-A1- 102014 016 973
- DE-A1- 19 619 110
- DE-C1- 4 019 363
- HIRT M: "PLANETARY GEAR UNITS FOR STATE-OF-THE-ART MILLING TECHNIQUES IN THECEMENT INDUSTRY", MAN FORSCHEN PLANEN BAUEN, MAN MASCHINENFABRIK AUGSBURG-NUERNBERG A.G. AUGSBURG, DE, 1 January 1994 (1994-01-01), pages 60 - 65, XP000517015

## Beschreibung

Die Erfindung betrifft eine Stützvorrichtung für ein Getriebepaar oder für Antriebsmittel. Die Erfindung betrifft auch eine Industrieapplikation, die mit einer entsprechenden Stützvorrichtung ausgestattet ist.

Aus EP 0 775 525 A1 ist eine Drehmomentabstützung für aufgesteckte Getriebe bekannt, über die gegenläufig drehende Walzen angetrieben werden. Die Drehmomentabstützung umfasst zwei Drehmomentstützen, die jeweils mit einem Getriebe verbunden sind. Jede Drehmomentabstützung übergreift im Wesentlichen das benachbarte Getriebe und weist ein Ende auf, an dem eine Koppelstange angebracht ist. Jede der Koppelstangen wiederum ist mit einer kurzen Drehmomentstütze verbunden, die am jeweils benachbarten Getriebe befestigt ist. Dadurch werden Reaktionsdrehmomente über die Koppelstangen als Stützkräfte in das jeweils benachbarte Getriebe eingeleitet.

Im Anlagenbau werden Anwendungen mit stetig zunehmender mechanischer Leistung angestrebt. Gleichzeitig sind für diese Anwendungen hohe Zuverlässigkeit, hohe Lebensdauer, Kompaktheit und einfache Herstellung gefordert. Für leistungsgesteigerte Anwendungen mit mehreren Getrieben besteht damit ein Bedarf an einer Stützvorrichtung für mehrere Getriebe, die in einfacher Weise eine Montage mehrerer Getriebe für Anwendungen mit erhöhter mechanischer Leistung bietet und zumindest in einem der skizzierten Aspekte eine Verbesserung bietet.

Die Aufgabe wird durch die Merkmale des unabhängigen Anspruchs 1 gelöst. Weitere besondere Ausführungsarten der Erfindung werden in den abhängigen Ansprüchen definiert.

Die Aufgabenstellung wird durch eine erfindungsgemäße Stützvorrichtung gelöst, die zur Befestigung eines Getriebepaars, also eine ersten und eines zweiten Getriebes, geeignet ausgebildet ist. Die Stützvorrichtung umfasst dazu zwei Getriebestützen, die benachbart zueinander angeordnet sind. Jede der Getriebestützen weist einen Stützflansch, also einen ersten und zweiten Stützflansch auf. Dabei ist am ersten Stützflansch eine erste Stütze befestigt. Die erste Stütze ist dazu ausgebildet, eine erste Stützkraft in den zweiten Stützflansch einzuleiten. Die erste Stützkraft wird beispielsweise durch ein Reaktionsdrehmoment hervorgerufen, das wieder durch ein Antriebsdrehmoment hervorgerufen wird, das in das erste Getriebe eingeleitet wird. In analoger Weise ist die zweite Stütze dazu ausgebildet, eine zweite Stützkraft in den ersten Stützflansch einzuleiten. Die Stützkräfte können je nach Orientierung der Antriebsdrehmomente, und damit je nach Orientierungen der Reaktionsdrehmomente, jeweils als Zug- oder Druckkräfte ausgebildet sein. Die Stützkräfte werden dabei radial, tangential und/oder einer Kombination hieraus in den jeweiligen Stützflansch eingeleitet. Dadurch wird insgesamt eine vorteilhafte Lagerung des ersten und zweiten Getriebes während eines bestimmungsgemäßen Betriebs erzielt. Erfindungsgemäß ist die zweite Stütze dazu ausgebildet, dass sich die erste Stütze durch die zweite Stütze erstreckt. Dies erlaubt eine enge räumliche Anordnung der beiden Stützen und ermöglicht eine günstige und verformungsarme Befestigung der Stützen an ihren jeweiligen Stützflanschen. Infolgedessen können bei gleichbleibender Masse der Stützarme höhere Stützkräfte in die Stützflansche eingeleitet werden. Alternativ können gleichbleibende Stützkräfte bei reduzierter Masse der Stützarme in die Stützflansche eingeleitet werden. Die so erzielte gesteigerte Materialausnutzung bietet auch ein erhöhtes Maß an Lebensdauer, und damit Zuverlässigkeit. Die erfindungsgemäße Stützvorrichtung ist in einfacher Weise herstellbar und inspizierbar, und somit kosteneffizient. Die erfindungsgemäße Stützvorrichtung wird dabei für Getriebe verwendet, die dazu ausgebildet sind, Leistungen von 100 kW bis 10 MW, insbesondere 200 kW bis 7,0 MW zu übertragen. Die erfindungsgemäße Stützvorrichtung kann auch statt mit Getrieben mit Antriebsmitteln, wie beispielsweise Elektromotoren oder Hydraulikmotoren, verbunden werden.

Erfindungsgemäß ist die erste Stütze einlaschig ausgebildet und die zweite Stütze zweilaschig. Unter einlaschig ist hierbei zu verstehen, dass die erste Stütze zumindest abschnittsweise nur eine im Wesentlichen flächige Komponente umfasst und in diesem Abschnitt mechanische als Scheibe beschreibbar ist. Unter zweilaschig ist im Sinne der beanspruchten Lösung zu verstehen, dass die zweite Stütze zumindest abschnittsweise nur zwei im Wesentlichen parallel angeordnete flächige Komponenten umfasst, die wiederum in den entsprechenden Abschnitten jeweils als Schreibe beschreibbar sind. Dadurch weist die zweite Stütze einen lichten Zwischenraum auf, der dazu ausgebildet ist, zumindest abschnittsweise die einlaschige erste Stütze aufzunehmen. Eine Kombination einer einlaschigen ersten Stütze und einer zweilaschigen zweiten Stütze erlaubt in einfacher Weise ein Erstrecken der ersten Stütze durch die zweite Stütze. Entsprechende Stützen sind in einfacher Weise schnell und kosteneffizient herstellbar. Ferner können einlaschige und zweilaschige Stützen mit Aussparungen ausgebildet sein, die eine Gewichtersparnis bei den Stützen erlauben, und so die Montage der beanspruchten Stützvorrichtung vereinfachen. Darüber hinaus sind entsprechend einlaschige und zweilaschige Stützen in einfacher Weise mechanisch berechenbar, was eine schnelle Anpassung der beanspruchten Lösung an unterschiedliche Anwendungsfälle erlaubt.

Darüber hinaus können die erste und zweite Stütze in der beanspruchten Stützvorrichtung auch zweischnittig voneinander getrennt angeordnet sein. Unter einer zweischnittigen Trennung ist zu verstehen, dass zwei Schnittebenen erforderlich sind, um die erste Stütze von der zweiten Stütze im Sinne der Technischen Mechanik freizuschneiden. Hierdurch wird insgesamt ein einfacher Aufbau gewährleistet.

In einer weiteren Ausführungsform der Stützvorrichtung kann die erste Stütze einen Stützarm aufweisen, der in einer Flanschhauptebene des ersten Stützflansches ausgebildet ist. Eine Flanschhauptebene ist eine Ebene, die im Wesentlichen senkrecht zu mindestens einer Hauptachse eines Getriebes steht, das an der Stützvorrichtung montiert ist. Die Hauptachse ist dabei beispielsweise die Achse, um die sich eine Getriebeeingangswelle und/oder Getriebeausgangswelle in einem bestimmungsgemäßen Betrieb dreht. Der Stützarm an der ersten Stütze ist dazu ausgebildet, die zweite Getriebestütze, und damit den zweiten Stützflansch zu übergreifen. Der Stützarm am ersten Stützflansch ist so dazu ausgebildet, eine Stützkraft lateral außen in den zweiten Stützflansch einzuleiten. Durch eine Positionierung des Stützarms in der Flanschhauptebene wirken Radialkräfte auf den Stützarm mit einer reduzierten Hebellänge in Axialrichtung, und damit im Wesentlichen frei von Biegelasten, auf den ersten Stützflansch ein. Der erste Stützflansch wird damit in einem bestimmungsgemäßen Betrieb durch den Stützarm damit in höchstens vernachlässigbarem Maß auf Biegung beansprucht. Ein Aspekt der vorgeschlagenen Lösung besteht in der Erkenntnis, dass eine Biegebeanspruchung von Stützflanschen die mechanische Beanspruchbarkeit von Stützflanschen, und damit von entsprechenden Stützvorrichtunqen, wesentlich mitbestimmt. Infolgedessen bietet eine erste Stütze, deren Stützarm sich im Wesentlichen in einer Flanschhauptebene erstreckt, eine Steigerung an mechanischer Beanspruchbarkeit der Stützvorrichtung, und damit eine Möglichkeit für eine Leistungssteigerung einer angeschlossenen mechanischen Anwendung. Gleichermaßen werden durch die gesteigerte Beanspruchbarkeit die Lebensdauer und die Zuverlässigkeit des ersten Stützflansches erhöht. Darüber hinaus werden so Biegebeanspruchungen von lösbaren Befestigungsmitteln und auf diese einwirkende Axial- und Radialkräfte reduziert, mit denen die erste Stütze an der ersten Flanschstütze befestigt ist. Infolgedessen sind in der beanspruchten Stützvorrichtung beispielsweise Schrauben als lösbares Befestigungsmittel einsetzbar. Die Verwendung von aufwendigen lösbaren Befestigungsmitteln, wie beispielsweise Passschrauben, ist somit nicht durchgängig erforderlich oder vorzugsweise entbehrlich. Derartige aufwendige Befestigungsmittel können bei der beanspruchten Lösung durch Schrauben oder Stifte mit verringerten Größen, niedrigeren Güten, wie beispielsweise Festigkeitsklassen, ersetzt werden. Ferner kann der Stützarm kann im Wesentlichen symmetrisch in der Flanschhauptebene ausgebildet sein. Eine derartige Ausbildung des Stützarms wird auch als reitende Anordnung bezeichnet.

Des Weiteren kann in der beanspruchten Stützvorrichtung die zweite Stütze zwei Stützarme aufweisen, die auf voneinander abgewandten Stirnseiten des zweiten Stützflansches ausgebildet sind. Dabei liegt zwischen den Stützarmen ein lichter Zwischenraum vor, der zu einem zumindest teilweisen Aufnehmen des Stützarms der zweiten Stütze dient. Der lichte Zwischenraum zwischen den Stützarmen der zweiten Stütze wird so durch eine Flanschhauptebene des zweiten Stützflanschs im Wesentlichen symmetrisch geteilt. Dadurch wird, analog zur reitenden Anordnung des Stützarms der ersten Stütze, der zweite Stützflansch nur mit einer reduzierten Biegelast beansprucht, also dessen Biegebeanspruchung verringert. Hierdurch werden die Vorzüge der beanspruchten Lösung in stärkerem Umfang verwirklicht.

Die Stützvorrichtung kann auch am ersten und/oder zweiten Stützarm an dessen Ende mit einer Strebe ausgestattet sein. Die Strebe, die am Ende des Stützarms der ersten Stütze angebracht ist, ist auch mit dem zweiten Stützflansch gekoppelt. Die Strebe, die am Ende des Stützarms der zweiten Stütze angebracht ist, ist auch mit dem ersten Stützflansch gekoppelt. Die Streben können jeweils mit einer Augenstabverbindung mit dem entsprechenden Stützarm gekoppelt sein und so eine Stützkraft auf den ersten bzw. zweiten Stützflansch übertragen. Die Strebe ist zur Übertragung einer Zugkraft und/oder Drucckraft ausgebildet, so dass unterschiedliche Belastungszustände, also Drehrichtungen von Getriebeeingangswellen, durch die Stützvorrichtung aufnehmbar sind.

Ferner können die Streben jeweils zu einer im Wesentlichen biegemomentfreien Einleitung einer Zugkraft oder Druckkraft in den ersten bzw. zweiten Stützflansch ausgebildet sein. Dazu sind die Streben jeweils derart mit der ersten bzw. zweiten Stütze und dem ersten bzw. zweiten Stützflansch verbunden, dass die übertragene Zugkraft oder Druckkraft auch in der ersten bzw. zweiten Flanschhauptebene liegt. Beispielsweise kann die Zugkraft oder Druckkraft frei von einer Axialkomponente in den ersten bzw. zweiten Stützflansch eingeleitet werden. Dabei ist die Zugkraft oder Druckkraft, bezogen auf die Hauptachse des jeweiligen Getriebes, als Kombination einer Radialkraft und einer Tangentialkraft darstellbar. Zu diesem Zweck kann am ersten und/oder zweiten Stützflansch eine entsprechende Strebenverankerung angebracht sein.

In einer weiteren Ausführungsform der Stützvorrichtung kann die Strebenverankerung am ersten und/oder zweiten Stützflansch an der ersten bzw. zweiten Stütze befestigt sein. Die Strebenverankerung kann dabei insbesondere einstückig mit der ersten bzw. zweiten Stütze ausgebildet sein, also angeformt sein. Dadurch wird die Herstellung des ersten und/oder zweiten Stützflansches vereinfacht. Insbesondere kann der erste und/oder zweite Stützflansch damit bezüglich der Hauptachse des zugehörigen Getriebes im Wesentlichen rotationssymmetrisch ausgebildet sein. Ferner wird durch ein Zusammenfassen der ersten bzw. zweiten Stütze mit der zugehörigen Strebenverankerung die Anzahl der Bauteile reduziert, insbesondere separate Befestigungsmittel für die Strebenverankerungen eingespart, was wiederum eine vereinfachte Montage gewährleistet. Ferner ist erlaubt das Zusammenfassen von Stützflansch und Strebenverankerung, eine konstruktive Anpassung eines Übergangs zwischen der Strebenverankerung und dem zugehörigen Stützarm. Folglich ist der Übergang von der Strebenverankerung zum Stützarm gezielt belastungs- und materialgerecht konstruierbar und eine erhöhte Materialausnutzung erzielbar.

Alternativ kann auch mindestens eine der Strebenverankerungen unmittelbar an den ersten bzw. zweiten Stützflansch angeformt sein. Eine an den ersten oder zweiten Stützflansch angeformte Strebenverankerung bietet eine einfache Möglichkeit, eine von einer Strebe eingeleitete Stützkraft belastungs- und materialgerecht in den ersten oder zweiten Stützflansch einzuleiten. Ferner werden durch eine angeformte Strebenverankerung gegenüber separaten Strebenverankerungen in Differentialbauweise Befestigungsmittel und Montageaufwand einsgespart.

Darüber hinaus können der erste und/oder zweite Stützflansch im Bereich der jeweiligen Flanschhauptebene zumindest abschnittsweise radial verkürzt ausgebildet sein. Eine solche radiale Verkürzung kann als eine Abweichung von einer rotationssymmetrischen Grundform des ersten und/oder zweiten Stützflanschs ausgebildet sein. Dies kann insbesondere eine abgeschnittene Flanschkontur sein. Der radial verkürzte erste und/oder zweite Stützflansch dient dazu, einen Hauptachsenabstand zwischen den Hauptachsen der Getriebe zu verringern. Dazu können die Stützflansche derart gegenüberliegend angeordnet sein, dass die Flanschhauptebenen der beiden Stützflansche im Wesentlichen identisch sind. Durch die radiale Verkürzung der Stützflansche wird so eine kompaktere Positionierung der Getriebe ermöglicht. Die beanspruchte Lösung ist damit auch bei mechanischen Anwendungen verwendbar, die einen engen Hauptachsenabstand erfordern. Dadurch weist die beanspruchte Stützvorrichtung ein vergrößertes Einsatzspektrum auf. Ebenso kann bei bestehenden mechanischen Anwendungen, die denen ein maximal verfügbarer Bauraum durch einen Hauptachsenabstand definiert ist, durch die beanspruchte Lösung ein leistungsstärkerer Antrieb und/oder Getriebe eingesetzt werden. Bestehende Industrieapplikationen sind durch die beanspruchte Stützvorrichtung somit in einfacher Weise ausbaubar und eine erhöhte Leistungsdichte erzielbar.

Des Weiteren kann der erste und/oder zweite Stützflansch als Gehäusekomponente eines Getriebes ausgebildet sein. Der erste und/oder zweite Stützflansch kann dabei insbesondere als abtriebsseitiger Gehäuseabschnitt ausgebildet sein, in dem sich eine Abtriebswelle des korrespondierenden Getriebes erstreckt. Hierdurch wird ein hoher Grad in Integration beim Aufbau einer Industrieapplikation erzielt, die mit einer entsprechenden Stützvorrichtung ausgestattet ist.

Die zugrundeliegende Aufgabenstellung wird auch durch eine erfindungsgemäße Industrieapplikation gelöst. Die Industrieapplikation weist ein erstes Getriebe auf, dem über eine erste Getriebeeingangswelle Antriebsleistung, also ein Antriebsdrehmoment bei einer Betriebsdrehzahl, zuführbar ist. Die Industrieapplikation umfasst auch ein zweites Getriebe, dem im Wesentlichen analog zum ersten Getriebe, über eine zweite Getriebeeingangswelle Antriebsleistung zuführbar ist. Die erste und zweite Getriebeeingangswellen weisen in einem bestimmungsgemäßen Betrieb gegenläufige Drehrichtungen auf, durch die entsprechende Reaktionsdrehmomente hervorgerufen werden. Das erste und zweite Getriebe sind an einer Stützvorrichtung befestigt, in der durch die Antriebsleistungen die Reaktionsmomente hervorgerufen werden und in der sich abhängig von den vorliegenden Antriebsleistungen ein Belastungszustand einstellt. Zur einer vorteilhaften Aufnahme des vorliegenden Belastungszustands ist die Stützvorrichtung gemäß einer der oben beschriebenen Ausführungsformen ausgebildet. Durch die entsprechende Stützvorrichtung wird die Montage der Industrieapplikation vereinfacht. Durch die erhöhte Zuverlässigkeit und Lebensdauer der Stützvorrichtung wird der Wartungsaufwand für die Industrieapplikation reduziert. Ferner kann die Industrieapplikation durch die gesteigerte mechanische Beanspruchbarkeit der Stützvorrichtung mit einer erhöhten Antriebsleistung ausgestattet werden, und so die Produktivität der Industrieapplikation erhöht werden. Die Industrieapplikation kann beispielsweise als Mühle, Wälzmühle, Zementmühle, Zuckermühle, Extruder, Förderanlage, Gesteinsbrecher, Walzenbrecher, Walzenpresse, Rollpresse, Pumpe, Ventilator, Schiffsantrieb oder Hebevorrichtung ausgebildet sein.

Ferner kann das erste und/oder zweite Getriebe als Planetengetriebe ausgebildet sein. Planetengetriebe bieten eine hohe Leistungsdichte und erlauben es, die gesteigerte mechanische Beanspruchbarkeit der Stützvorrichtung in besonderem Maß auszunutzen. Dadurch werden die Vorteile der beanspruchten Stützvorrichtung insgesamt in einem hohen Maß erzielt. Alternativ kann jedes der Getriebe jeweils auch als Stirnradgetriebe, als Schneckengetriebe, oder als Kegelradgetriebe ausgebildet sein.

Die Erfindung wird im Folgenden anhand einzelner Ausführungsformen beschrieben. Die Figuren sind insoweit in gegenseitiger Ergänzung zu lesen, dass gleiche Bezugszeichen in den Figuren auch die gleiche technische Bedeutung haben. Es zeigen im Einzelnen:
- FIG 1: eine Schrägansicht einer ersten Ausführungsform der beanspruchten Stützvorrichtung;
- FIG 2: eine Detailansicht der ersten Ausführungsform der beanspruchten Stützvorrichtung in Längsschnittansicht;
- FIG 3: eine weitere Detailansicht der ersten Ausführungsform der beanspruchten Stützvorrichtung in Längsschnittansicht;
- FIG 4: eine schematische Übersicht einer ersten Ausführungsform einer beanspruchten Industrieapplikation.

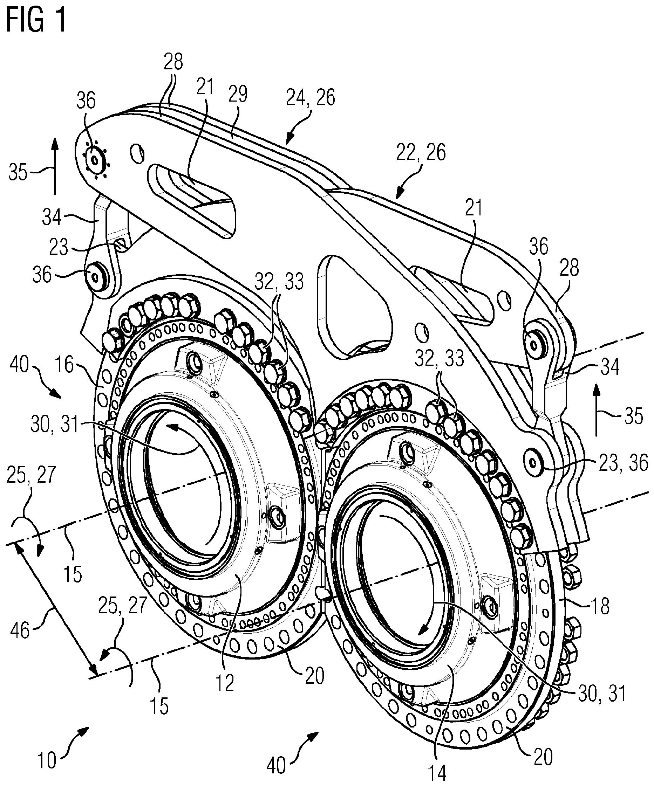

FIG 1 zeigt schematisch eine erste Ausführungsform einer erfindungsgemäßen Stützvorrichtung 10, die eine erste und zweite Getriebehalterung 12, 14 aufweist, die jeweils dazu ausgebildet sind, daran ein nicht näher dargestelltes Getriebe 40 zu befestigen. Die erste Getriebehalterung 12 weist einen ersten Stützflansch 16 auf und die zweite Getriebehalterung 14 einen zweiten Stützflansch 18. Im montierten Zustand werden in die Getriebe 40, die sich um ihre Hauptachsen 15 drehen, Drehmomente 25 eingeleitet. Die Hauptachsen 15 weisen zueinander einen Hauptachsenabstand 46 auf. Dabei weisen die Drehmomente 25 entgegengesetzte Drehrichtungen 27 auf. Infolgedessen werden in den Getriebehalterungen 12, 14, und damit in den Stützflanschen 16, 18 Reaktionsdrehmomente 30 hervorgerufen. Dabei weisen die Reaktionsdrehmomente 30 jeweils Reaktionsrichtungen 31 auf, die den entsprechenden eingeleiteten Drehmomenten 25 des Getriebes 40 an der jeweiligen Getriebehalterung 12, 14 entgegengesetzt sind. Der erste und zweite Stützflansch 16, 18 sind damit entgegengesetzt orientierten Reaktionsdrehmomenten 30 unterworfen. Am ersten Stützflansch 16 ist über eine Mehrzahl an Befestigungsmitteln 33, die in entsprechenden Ausnehmungen 32 aufgenommen sind, eine erste Stütze 22 angebracht, so dass das Reaktionsmoment 30, das auf den ersten Stützflansch 16 einwirkt, auch auf die erste Stütze 16 einwirkt. Die erste Stütze 22 weist einen Stützarm 26 auf, der den benachbart angeordneten zweiten Stützflansch 18 im Wesentlichen übergreift. Dabei ist der Stützarm 26 der ersten Stütze 22 im Wesentlichen in einer Flanschhauptebene 20 des ersten Stützflansches 16 angeordnet. Unter der Flanschhauptebene 20 ist dabei die Ebene zu verstehen, die durch die Ausnehmungen 32 für die Befestigungsmittel 33 definiert ist, und dabei im Wesentlichen senkrecht zu einer entsprechenden Hauptachse 15 eines Getriebe 40 liegt. Die Anordnung des Stützarms 26 der ersten Stütze 22 in der Flanschhauptebene 20 des ersten Stützflansches 16 wird dabei auch als reitende Anordnung bezeichnet.

An einem Stützarm-Ende 28 ihres Stützarms 26 ist die erste Stütze 22 über eine Augenstabverbindung 36 mit einer Strebe 34 gelenkig verbunden. Die Strebe 34 am entsprechenden Stützarm-Ende 28 wiederum ist über eine weitere Augenstabverbindung 36 mit einem Befestigungslager 23 verbunden, das wiederum einstückig mit der zweiten Stütze 24 ausgebildet ist. Die zweite Stütze 24 ist über Befestigungselemente 33 mit dem zweiten Stützflansch 18 verbunden. Ein Reaktionsdrehmoment 30, das sich durch das Drehmoment 25 eines Getriebes 40 an der ersten Getriebehalterung 12 ergibt, wird über den Stützarm 26 der ersten Stütze 22 in den zweiten Stützflansch 18 eingeleitet. Dabei wird durch das Befestigungslager 23 am zweiten Stützflansch 18 auf die entsprechende Strebe 34 eine Zugkraft 35 ausgeübt. In korrespondierender Form wird ein Reaktionsdrehmoment 30, das sich infolge eines Drehmoments 25 eines Getriebes 40 einstellt, das an der zweiten Getriebehalterung 14 angebracht ist, über die zweite Stütze 24 in den ersten Stützflansch 16 eingeleitet.

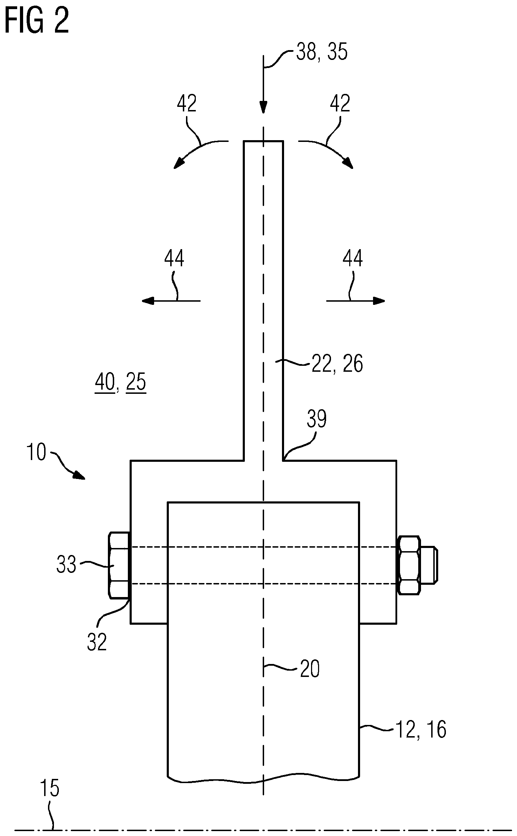

Die erste Stütze 22 weist nur einen Stützarm 26 auf und ist somit einlaschig ausgebildet. Die zweite Stütze 24 weist zwei Stützarme 26 auf, die in Wesentlichen kongruent ausgebildet sind und beanstandet zueinander am zweiten Stützflansch 18 angebracht sind. Damit ist die zweite Stütze 24 zweilaschig ausgebildet. Die Stützarme 26 der zweiten Stütze 24 sind derart voneinander beanstandet angeordnet, dass sich der Stützarm 26 der ersten Stütze 22 durch einen lichten Raum 29 zwischen den Stützarmen 26 der zweiten Stütze 24 erstreckt. Dadurch erstreckt sich die erste Stütze 22 durch die zweite Stütze 24. Der Stützarm 26 der ersten Stütze 22 und die Stützarme 26 der zweiten Stütze 26 sind folglich zweischnittig voneinander getrennt. Ferner ist jeder der Stützarme 26 in der Stützvorrichtung 10 mit Aussparungen 21 versehen, durch die eine verbesserte Materialausnutzung der Stützarme 26 erzielt wird. Die Anordnung der Stützarme 26 der ersten und zweiten Stütze 24 erlaubt es, dass in den Flanschhauptebenen 20 des ersten und zweiten Stützflansches 16, 18 im Wesentlichen rein koplanare Kräfte und Drehmomente vorliegen, und somit der erste und zweite Stützflansch 16, 18 im Wesentlichen biegemomentfrei sind. Dieser Aspekt wird in FIG. 2 näher dargestellt. Ferner sind der erste und zweite Stützflansch 16, 18 an einander zugewandten Seiten im Bereich der Flanschhauptebenen 20 abschnittsweise radial verkürzt ausgebildet. Infolgedessen ist der Hauptachsenabstand 46 gegenüber den aus dem Stand der Technik bekannten Lösungen verringert.

In FIG 2 ist schematisch eine Detailansicht der Ausführungsform gemäß FIG 1 im Bereich der ersten Getriebehalterung 12 dargestellt. Die erste Stütze 22 ist über zumindest ein Befestigungsmittel 33 am ersten Stützflansch 16 befestigt, der über entsprechende Ausnehmungen 32 zur Aufnahme der Befestigungselemente 33 verfügt. Das zumindest eine Befestigungsmittel 33 ist dabei als Schraube mit Mutter ausgebildet. Der Stützarm 26 ist derart ausgebildet und am ersten Stützflansch 16 angeordnet, dass die Flanschhauptebene 20 des ersten Stützflansches 16 den Stützarm 26 der ersten Stütze 22 im Wesentlichen symmetrisch teilt. Dabei ist der Stützarm 26 einlaschig ausgebildet. Auf den Stützarm 26 wirkt eine Biegekraft 38 ein, die sich durch die Zugkraft 35 ergibt, die gemäß FIG 1 in der Strebe 34 am Stützarm-Ende 28 des Stützarms 26 der ersten Stütze 22 vorliegt. Dadurch, dass die erste Stütze 22 bezogen auf die Flanschhauptebene 20 des ersten Stützflansches 16 im Wesentlichen symmetrisch angeordnet ist, werden Biegemomente 42, durch die dem Stützarm 26 und/oder dem ersten Stützflansch 16 eine Auslenkung 44 entlang einer Hauptdrehrichtungen 15 aufprägbar ist, zu Null. Damit werden Biegebeanspruchungen durch Biegemomente 42 im Sinne von FIG 2 in der beanspruchten Stützvorrichtung 10 vermieden. Insbesondere wird eine mechanische Beanspruchung im Bereich einer Stützarmwurzel 39 reduziert. Durch das Vermeiden der Biegemomente 42 liegt im Betrieb der beanspruchten Stützvorrichtung 10 eine günstigere Materialbeanspruchung vor. Dies erlaubt es, an die Stützvorrichtung 10 Getriebe 40 anzuschließen, in denen gesteigerte Drehmomente 25 vorliegen und gleichzeitig die Materialbeanspruchung im ersten Stützflansch 16 konstant zu halten.

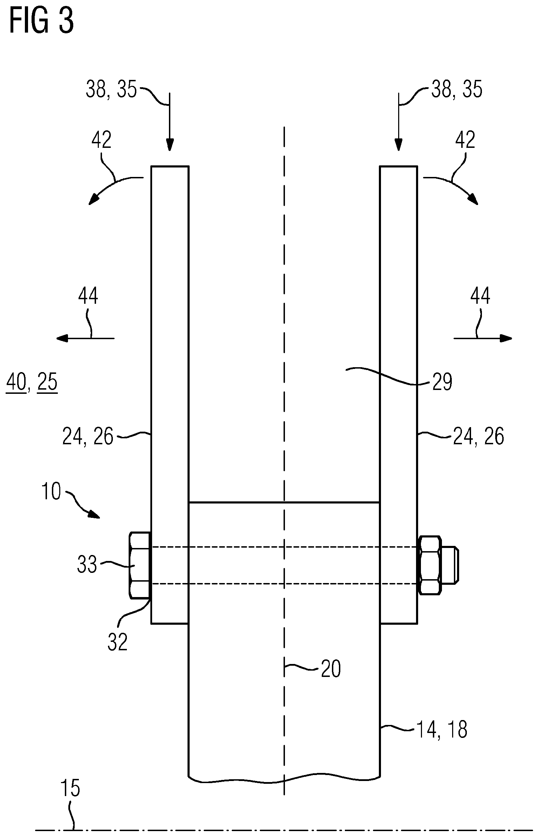

Korrespondierend zu FIG 2 ist in FIG 3 eine Detailansicht der Ausführungsform aus FIG 1 abgebildet. FIG 3 zeigt einen Längsschnitt im Bereich des zweiten Stützflansches 18 an der zweiten Getriebehalterung 14. Am zweiten Stützflansch 18 ist eine zweite Stütze 24 über Befestigungsmittel 33 angebracht, die als Schrauben mit Muttern ausgebildet sind. Dazu sind die Befestigungsmittel 33 in Ausnehmungen 32 in der zweiten Stütze 22 und dem zweiten Stützflansch 18 aufgenommen. Die zweite Stütze 18 weist zwei Stützarme 26 auf, die im Wesentlichen parallel zueinander sind. Zwischen den Stützarmen 26 ist ein lichter Raum 29 ausgebildet, der dazu ausgebildet ist, einen Stützarm 26 einer ersten Stütze 22 wie in FIG 2 aufzunehmen. Infolgedessen ist es möglich, dass sich die erste Stütze 22 gemäß FIG 2 durch die zweite Stütze 24 erstreckt. Die Stützarme 26 der zweiten Stütze 24 sind symmetrisch zu einer Flanschhauptebene 20 ausgerichtet, die sich im Wesentlichen mittig durch den zweiten Stützflansch 18 erstreckt. Auf jeden der Stützarme 26 gemäß FIG 3 wirkt eine Biegekraft 38 ein, die durch eine Zugkraft 35 hervorgerufen wird, die im bestimmungsgemäßen Betrieb durch eine Zugkraft 35 an zumindest einem Stützarm-Ende 28 auftritt. Die Biegekräfte 38 wirken im Wesentlichen parallel zur Flanschhauptebene 20, so dass Biegemomente 42, die dazu geeignet sind, eine Auslenkung 44 der Stützarme 26 entlang der Hauptdrehachse 15 hervorzurufen, zu Null werden. Die so erzielte Reduzierung der Materialbeanspruchung gewährleistet eine erhöhte Lebensdauer der zweiten Stütze 18. Alternativ kann so auch das Drehmoment 25, das über ein Getriebe 40 übertragen wird, das am zweiten Getriebehalter 14 angebracht ist, erhöht werden, und so das für die zweite Stütze 24 und den zweiten Stützflansch 18 stärker ausnutzen.

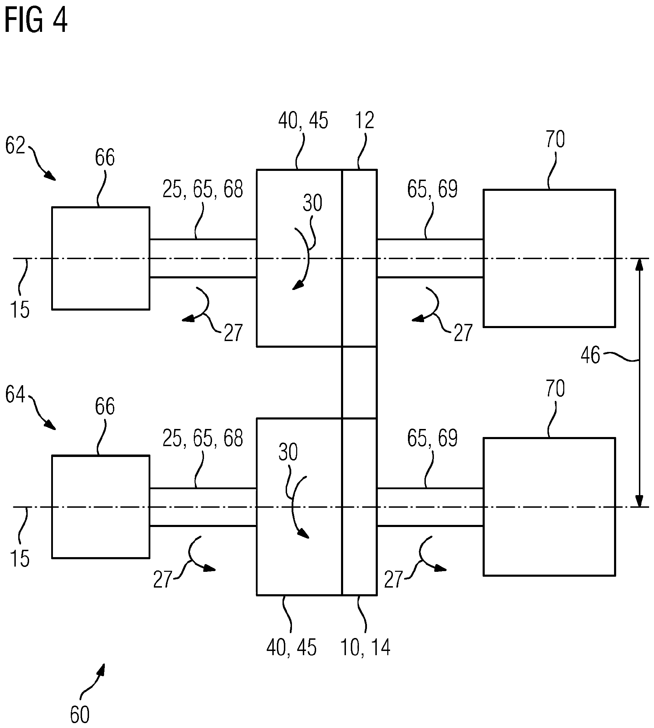

In FIG 4 ist schematisch der Aufbau einer Industrieapplikation 60 gemäß einer ersten Ausführungsform dargestellt. Die Industrieapplikation 60 umfasst zwei parallele Stränge 62, 64, in denen jeweils ein Antriebsmittel 66 angeordnet ist. Die Antriebsmittel 66 sind jeweils als Elektromotor oder Verbrennungsmotor ausgebildet und verfügen jeweils über eine Antriebswelle 68. Über die Antriebswelle 68 wird eine Antriebsleistung 65, die ein bestimmtes Drehmoment 25 umfasst, an ein Getriebe 40 übertragen. Das erste Getriebe 40 im ersten Strang 64 und das zweite Getriebe 40 im zweiten Strang 64 sind jeweils als Planetengetriebe 45 mit einer Hauptachse 15 ausgebildet. Die Hauptachsen 15 weisen zueinander einen Hauptachsenabstand 46 auf. Durch das erste und zweite Getriebe 40 erfolgt jeweils eine Umformung der Antriebsleistung 65 in puncto Drehmoment und Drehzahl. Diese Umformung umfasst, dass bei der eine Steigerung des Drehmoments zu einer Senkung der Drehzahl führt und umgekehrt. Die im Wesentlichen gleichbleibende Antriebsleistung 65 wird jeweils von den Getrieben 40 jeweils über eine Abtriebswelle 69 an eine mechanische Anwendung 70 weitergeleitet, durch die der Zweck der Industrieapplikation 60 erfüllt wird. Die Antriebsmittel 66 sind derart ausgebildet, dass die Antriebswellen 68 gegenläufige Drehrichtungen 27 aufweisen. Dadurch werden in den Getrieben 40 gegenläufige Reaktionsmomente 30 hervorgerufen, die wiederum durch eine gemeinsame Stützvorrichtung 10 aufgenommen wird. Die Stützvorrichtung weist eine erste und eine zweite Getriebehalterung 12, 14 auf, in denen jeweils eines der Getriebe 40 montiert ist. Die Stützvorrichtung 10 ist dabei gemäß einer der oben beschriebenen Ausführungsformen ausgebildet. Die Industrieapplikation 60 kann durch entsprechende Wahl der mechanischen Anwendung 70 beispielsweise als Mühle, Wälzmühle, Zementmühle, Zuckermühle, Extruder, Förderanlage, Gesteinsbrecher, Walzenbrecher, Walzenpresse, Rollpresse, Pumpe, Ventilator, Schiffsantrieb oder Hebevorrichtung ausgebildet sein.

## Patentansprüche

1. Stützvorrichtung (10) für ein erstes und ein zweites Getriebe (40) oder für Antriebsmittel (66), umfassend einen ersten und einen zweiten Stützflansch (16, 18), wobei am ersten Stützflansch (16) eine erste Stütze (22) zu einer Einleitung einer ersten Stützkraft in den zweiten Stützflansch (18) angebracht ist und am zweiten Stützflansch (18) eine zweite Stütze (24) zu einer Einleitung einer zweiten Stützkraft in den ersten Stützflansch (16) angebracht ist, wobei die erste Stütze (22) einlaschig ausgebildet ist und die zweite Stütze (24) zweilaschig ausgebildet ist, wobei die erste Stütze (22) zumindest abschnittsweise nur eine im Wesentlichen flächige Komponente umfasst und in diesem Abschnitt als mechanische Scheibe beschreibbar ist, wobei die zweite Stütze (24) zumindest abschnittsweise nur zwei im Wesentlichen parallel angeordnete flächige Komponenten umfasst, die wiederum in den entsprechenden Abschnitten jeweils als Schreibe beschreibbar sind, wobei die zweite Stütze (24) einen lichten Zwischenraum aufweist, in dem die einlaschige erste Stütze (22) zumindest abschnittsweise aufgenommen ist, wodurch sich die erste Stütze (22) durch die zweite Stütze (24) erstreckt.

2. Stützvorrichtung (10) nach Anspruch 1, **dadurch gekennzeichnet, dass** die erste und zweite Stütze (22, 24) zweischnittig voneinander getrennt sind.

3. Stützvorrichtung (10) nach Anspruch 1 oder 2, **dadurch gekennzeichnet, dass** die erste Stütze (22) einen Stützarm (26) aufweist, der in einer Flanschhauptebene (20) des ersten Stützflansches (16) angebracht ist.

4. Stützvorrichtung (10) nach einem der Ansprüche 1 bis 3, **dadurch gekennzeichnet, dass** die zweite Stütze (24) zwei Stützarme (26) aufweist, die auf voneinander abgewandten Stirnflächen des zweiten Stützflansches (18) angebracht sind.

5. Stützvorrichtung (10) nach einem der Ansprüche 1 bis 4, **dadurch gekennzeichnet, dass** an einem der Stützarme (26) an einem Ende (28) eine Strebe (34) angebracht ist, die zu einer Einleitung einer Zugkraft und/oder Druckkraft (35) ausgebildet ist.

6. Stützvorrichtung (10) nach Anspruch 5, **dadurch gekennzeichnet, dass** die Strebe (34) zur einer, bezogen auf eine Flanschhauptebene (20), biegemomentfreien Einleitung einer Zugkraft oder Druckkraft (35) in den ersten bzw. zweiten Stützflansch (16, 18) ausgebildet ist.

7. Stützvorrichtung (10) nach Anspruch 5 oder 6, **dadurch gekennzeichnet, dass** die erste und/oder zweite Stütze (22, 24) mit einem Befestigungslager (23) ausgestattet ist.

8. Stützvorrichtung (10) nach Anspruch 7, **dadurch gekennzeichnet, dass** mindestens eines der Befestigungslager (23) an den ersten bzw. zweiten Stützflansch (16, 18) angeformt ist.

9. Stützvorrichtung (10) nach einem der Ansprüche 1 bis 8, **dadurch gekennzeichnet, dass** der erste und/oder zweite Stützflansch (16, 18) zur Verringerung eines Hauptachsenabstands (46) zwischen dem ersten und zweiten Getriebe (40) abschnittsweise radial verkürzt ausgebildet sind.

10. Stützvorrichtung (10) nach einem der Ansprüche 1 bis 9, **dadurch gekennzeichnet, dass** der erste und/oder zweite Stützflansch (16, 18) als Gehäusekomponente eines Getriebes (40) ausgebildet ist.

11. Industrieapplikation (60), umfassend ein erstes Getriebe (40), dem über eine erste Antriebswelle (68) Antriebsleistung (65) zuführbar ist, und ein zweites Getriebe (40), dem über eine zweite Antriebswelle (68) Antriebsleistung (65) zuführbar ist, wobei die erste und zweite Antriebswelle (68) gegensinnige Drehrichtungen (27) aufweisen und das erste und das zweite Getriebe (40) an einer Stützvorrichtung (10) angebracht sind, **dadurch gekennzeichnet, dass** die Stützvorrichtung (10) nach einem der Ansprüche 1 bis 10 ausgebildet ist.

12. Industrieapplikation (60) nach Anspruch 11, **dadurch gekennzeichnet, dass** das erste und/oder zweite Getriebe (40) als Planetengetriebe (45) ausgebildet ist.

13. Industrieapplikation (60) nach Anspruch 11 oder 12, **dadurch gekennzeichnet, dass** die Industrieapplikation als Mühle, Wälzmühle, Zementmühle, Zuckermühle, Extruder, Förderanlage, Gesteinsbrecher, Walzenbrecher, Walzenpresse, Rollpresse, Pumpe, Ventilator, Schiffsantrieb oder Hebevorrichtung ausgebildet ist.

## Claims

1. Support apparatus (10) for a first and a second gearing (40) or for drive means (66), comprising a first and a second support flange (16, 18), wherein a first support (22) for introducing a first supporting force into the second support flange (18) is mounted on the first support flange (16) and a second support (24) for introducing a second supporting force into the first support flange (16) is mounted on the second support flange (18), wherein the first support (22) is embodied as single-lug and the second support (24) is embodied as double-lug, wherein the first support (22) comprises, at least in sections, only one substantially planar component and can be described in this section as a mechanical disc, wherein the second support (24) comprises, at least in sections, only two substantially parallel planar components, which in turn can each be described in the corresponding sections as a disc, wherein the second support (24) has a clear intermediate space in which the single-lug first support (22) is accommodated, at least in sections, whereby the first support (22) extends through the second support (24).

2. Support apparatus (10) according to claim 1, **characterised in that** the first and second support (22, 24) are separated from one another in two sections.

3. Support apparatus (10) according to claim 1 or 2, **characterised in that** the first support (22) comprises a support arm (26), which is mounted in a flange main plane (20) of the first support flange (16).

4. Support apparatus (10) according to one of claims 1 to 3, **characterised in that** the second support (24) comprises two support arms (26), which are mounted on oppositely-facing end faces of the second support flange (18).

5. Support apparatus (10) according to one of claims 1 to 4, **characterised in that** a strut (34) embodied to introduce a tensile force and/or compressive force (35) is mounted on an end (28) of one of the support arms (26).

6. Support apparatus (10) according to claim 5, **characterised in that** the strut (34) is embodied for bending-moment-free introduction, relative to a flange main plane (20), of a tensile force or compressive force (35) into the first or second support flange (16, 18).

7. Support apparatus (10) according to claim 5 or 6, **characterised in that** the first and/or second support (22, 24) is equipped with an attachment bearing (23).

8. Support apparatus (10) according to claim 7, **characterised in that** at least one of the attachment bearings (23) is integrally moulded onto the first or second support flange (16, 18).

9. Support apparatus (10) according to one of claims 1 to 8, **characterised in that**, to reduce a main axis distance (46) between the first and second gearing (40), the first and/or second support flange (16, 18) are embodied as radially shortened in sections.

10. Support apparatus (10) according to one of claims 1 to 9, **characterised in that** the first and/or second support flange (16, 18) is embodied as a housing component of a gearing (40).

11. Industrial application (60), comprising a first gearing (40) to which driving power (65) can be supplied via a first drive shaft (68), and a second gearing (40) to which driving power (65) can be supplied via a second drive shaft (68), wherein the first and second drive shaft (68) have opposite directions of rotation (27) and the first and the second gearing (40) are mounted on a support apparatus (10), **characterised in that** the support apparatus (10) is embodied according to one of claims 1 to 10.

12. Industrial application (60) according to claim 11, **characterised in that** the first and/or second gearing (40) is embodied as a planetary gearing (45).

13. Industrial application (60) according to claim 11 or 12, **characterised in that** the industrial application is embodied as a mill, roller mill, cement mill, sugar mill, extruder, conveyor system, rock crusher, roller crusher, roller press, roll press, pump, ventilator, ship's drive or lifting device.

## Revendications

1. Dispositif d'appui (10) destiné à des première et deuxième transmissions (40) ou à des moyens d'entraînement (66), ledit dispositif d'appui comprenant des première et deuxième brides d'appui (16, 18), un premier appui (22) étant fixé à la première bride d'appui (16) afin d'introduire une première force d'appui dans la deuxième bride d'appui (18) et un deuxième appui (24) étant fixé à la deuxième bride d'appui (18) pour introduire une deuxième force d'appui dans la première bride d'appui (16), le premier appui (22) étant conçu avec une attache et le deuxième appui (24) étant conçu avec deux attaches, le premier appui (22) comprenant au moins par portions uniquement un composant sensiblement bidimensionnel et pouvant être décrit dans cette portion comme un disque mécanique, le deuxième appui (24) comprenant au moins par portions uniquement deux composants sensiblement bidimensionnels disposés sensiblement en parallèle qui peuvent être décrits eux aussi dans les portions correspondantes comme des disques, le deuxième appui (24) comportant un espace intermédiaire libre dans lequel le premier appui à sangle unique (22) est reçu au moins par portions, de sorte que le premier appui (22) s'étend à travers le deuxième appui (24).

2. Dispositif d'appui (10) selon la revendication 1, **caractérisé en ce que** les premier et deuxième appuis (22, 24) sont séparés l'un de l'autre en deux sections.

3. Dispositif d'appui (10) selon la revendication 1 ou 2, **caractérisé en ce que** le premier appui (22) comporte un bras d'appui (26) qui est fixé dans un plan de bride principal (20) de la première bride d'appui (16) .

4. Dispositif d'appui (10) selon l'une des revendications 1 à 3, **caractérisé en ce que** le deuxième appui (24) comporte deux bras d'appui (26) qui sont fixés sur des faces frontales de la deuxième bride d'appui (18) qui sont opposées l'une à l'autre.

5. Dispositif d'appui (10) selon l'une des revendications 1 à 4, **caractérisé en ce qu'**une jambe (34), qui est conçue pour introduire une force de traction et/ou une force de compression (35), est fixée à l'un des bras d'appui (26) à une extrémité (28).

6. Dispositif d'appui (10) selon la revendication 5, **caractérisé en ce que** la jambe (34) est conçue pour introduire, sans moment de flexion par rapport à un plan de bride principal (20), une force de traction ou une force de compression (35) dans la première ou la deuxième bride d'appui (16, 18).

7. Dispositif d'appui (10) selon la revendication 5 ou 6, **caractérisé en ce que** les premier et/ou deuxième appuis (22, 24) sont équipés d'un palier de fixation (23) .

8. Dispositif d'appui (10) selon la revendication 7, **caractérisé en ce qu'**au moins un des paliers de fixation (23) est surmoulé sur la première ou la deuxième bride d'appui (16, 18).

9. Dispositif d'appui (10) selon l'une des revendications 1 à 8, **caractérisé en ce que** les première et/ou deuxième brides d'appui (16, 18) sont conçues pour être raccourcies radialement par portions afin de réduire la distance axiale principale (46) entre les première et deuxième transmissions (40).

10. Dispositif d'appui (10) selon l'une des revendications 1 à 9, **caractérisé en ce que** les première et/ou deuxième brides d'appui (16, 18) sont conçues comme un composant de boîtier d'une transmission (40).

11. Application industrielle (60), comprenant une première transmission (40), à laquelle la puissance d'entraînement (65) peut être fournie par le biais d'un premier arbre d'entraînement (68), et une deuxième transmission (40), à laquelle la puissance d'entraînement (65) peut être fournie par le biais d'un deuxième arbre d'entraînement (68), les premier et deuxième arbres d'entraînement (68) ayant des sens de rotation (27) opposés et les première et deuxième transmissions (40) étant fixées à un dispositif d'appui (10), **caractérisée en ce que** le dispositif d'appui (10) est formé selon l'une des revendications 1 à 10.

12. Application industrielle (60) selon la revendication 11, **caractérisée en ce que** les première et/ou deuxième transmissions (40) sont conçues comme une transmission planétaire (45).

13. Application industrielle (60) selon la revendication 11 ou 12, **caractérisée en ce que** l'application industrielle est conçue sous la forme d'un broyeur, d'un broyeur à rouleau, d'un broyeur à ciment, d'un broyeur à sucre, d'une extrudeuse, d'une installation de transport, d'un concasseur de roche, d'un concasseur à rouleau, d'une presse à rouleau, d'une presse à galet, d'une pompe, d'un ventilateur, d'une propulsion de bateau ou d'un système de levage.
